# EUROPEAN PATENT SPECIFICATION

(11) **EP 2 682 284 B1**
(45) Date of publication and mention of the grant of the patent: **01.05.2019**
(21) Application number: 12752938.6
(22) Date of filing: 13.02.2012
(51) Int. Cl.: B60C 11/12, B60C 11/03

(54) **PNEUMATIC TIRE**
LUFTREIFEN
PNEUMATIQUE

(30) Priority: 01.03.2011 JP 2011044044
(43) Date of publication of application: 08.01.2014
(73) Proprietor: Bridgestone Corporation, Tokyo 104-8340 (JP)
(72) Inventor: ODA, Akinori, Kodaira-shi, Tokyo 187-8531 (JP)
(74) Representative: Oxley, Robin John George
(86) International application number: PCT/JP2012/000933
(87) International publication number: WO 2012/117678

(56) References cited:
- EP-A2- 2 202 096
- JP-A- 3 193 506
- JP-A- 2010 064 693
- US-A1- 2010 206 446

## Description

### TECHNICAL FIELD

The present invention relates to a pneumatic tire that achieves both dry performance and on-snow performance.

### BACKGROUND ART

In order to ensure acceleration performance and braking performance of a tire on snowy roads, it is known to be effective to make the tread pattern a block pattern based on lug grooves and to form a plurality of sipes extending in the tire width direction in a zigzag manner in each block (for example, JP2000229505A). Furthermore, forming each block and sipe at an inclination with respect to the tire width direction increases the width direction edge density and ensures steering stability. Reference is made to JP 2010-064693, which discloses a tire according to the preamble of claim 1, and also to JP 3-193506, US 2010/206446 and EP 2202096.

### SUMMARY OF INVENTION

In the above-described conventional tire, a central land portion that includes the tire equatorial plane is a rib that is continuous in the tire circumferential direction, yet transverse grooves inclined with respect to the tire circumferential direction are formed so as to cut into the central land portion to near the tire equatorial plane. Hence, there is room for improvement in the circumferential direction rigidity of the central land portion.

Furthermore, the sipes formed in intermediate land portions on each side of the central land portion in the tire width direction are generally parallel to the inclination direction of the blocks in the intermediate land portions. In other words, the sipes are inclined with respect to the tire width direction, and thus there is room for improvement in the width direction rigidity of the intermediate land portions.

If the rigidity of the central land portion and the intermediate land portions is insufficient in this way, it may not be possible to ensure sufficient steering stability.

Therefore, it is an object of the present invention to provide a pneumatic tire with excellent steering stability on dry roads and snowy roads by both enhancing land portion rigidity and ensuring width direction edge density.

The present invention provides a pneumatic tire as set out in Claim 1, preferred features being set out on claims 2 to 8.

### BRIEF DESCRIPTION OF DRAWINGS

The present invention will be further described below with reference to the accompanying drawings, wherein:
FIG. 1 illustrates the tread pattern of a pneumatic tire which is not according to the present invention but is useful for understanding it; and
FIG. 2 illustrates the tread pattern of a pneumatic tire according to the present invention.

### DESCRIPTION OF EMBODIMENTS

The following describes a pneumatic tire according to the present invention in detail with reference to the drawings.

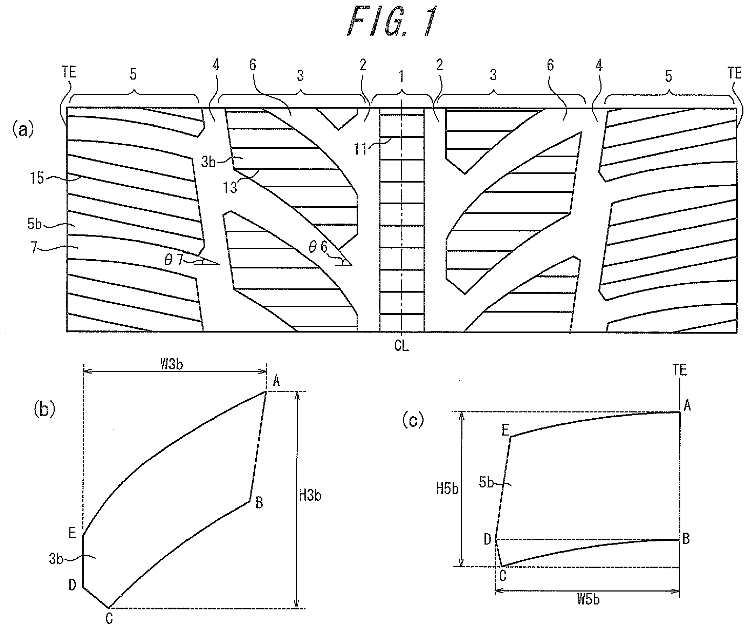

As shown in FIG. 1(a), the tread pattern of a pneumatic tire which is not according to the present invention, but is useful for understanding it, is provided with a central land portion 1 including a tire equatorial plane CL, an intermediate land portion 3 on each side of the central land portion 1 in the tire width direction, a pair of central circumferential grooves 2 extending continuously in the tire circumferential direction each between the central land portion 1 and a respective one of the intermediate land portions 3, an outer land portion 5 on an outside of each intermediate land portion 3 in the tire width direction, and a pair of outer circumferential grooves 4 extending continuously in the tire circumferential direction each between a respective one of the intermediate land portions 3 and a respective one of the outer land portions 5.

The central land portion 1 is defined as a rib by the pair of central circumferential grooves 2. This rib-shaped central land portion 1 is provided with a plurality of central sipes 11 extending linearly in the tire width direction.

Each intermediate land portion 3 is divided into blocks 3b by intermediate inclined grooves 6 that extend obliquely with respect to the tire circumferential direction and provide communication between one of the central circumferential grooves 2 and one of the outer circumferential grooves 4. Each block 3b is provided with a plurality of intermediate sipes 13 extending linearly in the tire width direction.

Each outer land portion 5 is divided into blocks 5b by a plurality of outer inclined grooves 7 that extend obliquely with respect to the tire circumferential direction and provide communication between one of the outer circumferential grooves 4 and a tread end TE. Each block 5b is provided with a plurality of outer sipes 15 extending along the outer inclined grooves 7.

As shown by the enlarged view in FIG. 1(b) of a block 3b in the intermediate land portion 3, each block 3b has a vertically long shape. In other words, the height H3b of the block 3b in the tire circumferential direction (the distance between line segments extending parallel to the tire width direction from vertices A and C, which are the vertices most separated in the tire circumferential direction when the vertices of the block 3b are A, B, C, D, and E) is greater than the width W3b of the block 3b in the tire width direction (the distance between line segments extending parallel to the tire circumferential direction from vertex A and vertices D and E, which are the vertices most separated in the tire width direction).

As shown by the enlarged view in FIG. 1(c) of a block 5b in the outer land portion 5, each block 5b has a horizontally long shape. In other words, the height H5b of the block 5b in the tire circumferential direction (the distance between line segments extending parallel to the tire width direction from vertices A and C, which are the vertices most separated in the tire circumferential direction when the vertices of the block 5b are A, B, C, D, and E) is less than the width W5b of the block 5b in the tire width direction (the distance from vertex D, the innermost vertex in the tire width direction, to the tread end TE).

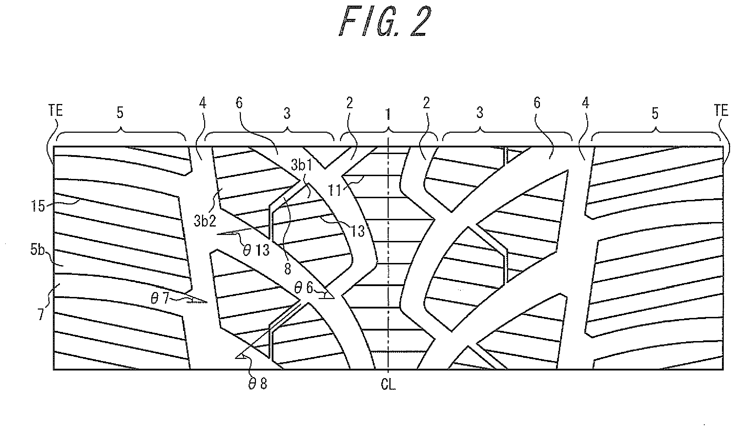

FIG. 2 illustrates the tread pattern of a pneumatic tire according to the present invention. In FIG. 2, constituent elements that are the same as FIG. 1 are provided with the same reference signs, and a description thereof is omitted.

The central circumferential grooves 2 extend in the tire circumferential intermediate inclined grooves 6 that extend obliquely with respect to the tire circumferential direction and provide communication between one of the central circumferential grooves 2 and one of the outer circumferential grooves 4. Each block 3b is provided with a plurality of intermediate sipes 13 extending linearly in the tire width direction.

Each outer land portion 5 is divided into blocks 5b by a plurality of outer inclined grooves 7 that extend obliquely with respect to the tire circumferential direction and provide communication between one of the outer circumferential grooves 4 and a tread end TE. Each block 5b is provided with a plurality of outer sipes 15 extending along the outer inclined grooves 7.

As shown by the enlarged view in FIG. 1(b) of a block 3b in the intermediate land portion 3, each block 3b has a vertically long shape. In other words, the height H3b of the block 3b in the tire circumferential direction (the distance between line segments extending parallel to the tire width direction from vertices A and C, which are the vertices most separated in the tire circumferential direction when the vertices of the block 3b are A, B, C, D, and E) is greater than the width W3b of the block 3b in the tire width direction (the distance between line segments extending parallel to the tire circumferential direction from vertex A and vertices D and E, which are the vertices most separated in the tire width direction).

As shown by the enlarged view in FIG. 1(c) of a block 5b in the outer land portion 5, each block 5b has a horizontally long shape. In other words, the height H5b of the block 5b in the tire circumferential direction (the distance between line segments extending parallel to the tire width direction from vertices A and C, which are the vertices most separated in the tire circumferential direction when the vertices of the block 5b are A, B, C, D, and E) is less than the width W5b of the block 5b in the tire width direction (the distance from vertex D, the innermost vertex in the tire width direction, to the tread end TE).

FIG. 2 illustrates the tread pattern of a pneumatic tire according to Embodiment 2 of the present invention. In Embodiment 2, constituent elements that are the same as Embodiment 1 are provided with the same reference signs, and a description thereof is omitted.

The central circumferential grooves 2 extend in the tire circumferential direction in a zigzag manner, and the groove walls of the central land portion 1 also extend in the tire circumferential direction in a zigzag manner.

Each intermediate land portion 3 is divided into blocks 3b1 and 3b2 by an intermediate inclined narrow groove 8 that is inclined in the opposite direction as the inclination direction with respect to the tire circumferential direction of the intermediate inclined grooves 6 and that communicates with the intermediate inclined grooves 6. It is essential that the sipes 13 formed in the blocks 3b1, 3b2 be inclined with respect to the tire width direction, and that an inclination angle θ13 with respect to the tire width direction be from 0° to 30°.

The following describes the operations and effects of the present invention.

Forming sipes throughout the land portions allows for enhancement of on-snow performance and on-ice performance. Specifically, the sipes achieve an edge effect on a snowy surface and achieve both an edge effect and a water layer removal effect on an icy surface.

Forming the central land portion 1 as a rib can increase the circumferential direction rigidity as compared to when the central land portion 1 is formed as blocks.

Forming the blocks 3b of each intermediate land portion 3 to be vertically long can increase the circumferential direction rigidity as compared to when the blocks 3b are horizontally long.

The circumferential direction rigidity of the central land portion 1 and each intermediate land portion 3 can thus be increased, yet the width direction rigidity is low. Therefore, by forming the central sipes 11 of the central land portion 1 to extend linearly along the tire width direction and forming the intermediate sipes 13 of the intermediate land portions 3 to be inclined with respect to the tire width direction at a relatively small angle of 0° to 30°, the reduction in the width direction rigidity of the land portions is suppressed to a minimum, thereby preventing a loss of steering stability.

Furthermore, since the central sipes 11 extending linearly in the tire width direction and the intermediate sipes 13 inclined at a small angle with respect to the tire width direction increase the edge component with respect to the tire circumferential direction, both on-snow braking performance and on-snow acceleration performance can be ensured.

Forming the blocks 5b of each outer land portion 5 to be horizontally long can increase the width direction rigidity as compared to when the blocks 5b are vertically long. Since the width direction rigidity of the blocks 5b in the outer land portions 5 is thus increased, the necessary width direction rigidity can be maintained even when the outer sipes 15 in the outer land portions 5 extend obliquely with respect to the tire circumferential direction by being formed along the outer inclined grooves 7 that extend obliquely with respect to the tire circumferential direction.

Furthermore, since the outer sipes 15 that extend obliquely with respect to the tire circumferential direction increase the sipe edge density in the tire width direction, steering stability can be ensured.

In summary, the central land portion 1 and the intermediate land portions 3 increase the circumferential direction rigidity and the edge effect, and the outer land portions 5 ensure width direction rigidity and edge density, thereby making it possible to achieve both dry performance and on-snow performance.

In FIG. 2, by forming the groove walls of the central land portion 1 to extend in the tire circumferential direction in a zigzag manner, the edge component in the circumferential direction can be increased and snow column shear force can be enhanced as compared to the structure in FIG. 1, thus allowing for enhancement of both on-snow braking performance and on-snow acceleration performance. The reason is that by connecting the central circumferential grooves 2 and the intermediate inclined grooves 6, which have approximately equal groove widths, the on-snow braking/driving performance is enhanced.

Furthermore, by providing the intermediate inclined narrow groove 8, the drainage performance can be increased as compared to the structure in FIG. 1. In order to enhance the on-snow steering stability, an inclination angle θ8 of the intermediate inclined narrow groove 8 with respect to the tire width direction is preferably from 15° to 85°.

In order to ensure the on-snow steering stability, an inclination angle θ6 of the intermediate inclined grooves 6 with respect to the tire width direction is preferably from 5° to 85°.

When the inclination angle θ6 is less than 5° or greater than 85°, the edge effect achieved by the blocks 3b in each intermediate land portion 3 may be insufficient. Additionally, if the inclination angle θ6 is less than 5°, greater tire noise and worse on-ice performance become cause for concern. On the other hand, if the inclination angle θ6 is greater than 85°, the blocks 3b may suffer uneven wear.

In order to ensure the on-snow steering stability, an inclination angle θ7 of the outer inclined grooves 7 with respect to the tire width direction is preferably from 5° to 45°.

If the inclination angle θ7 is less than 5°, the edge effect achieved by the blocks 5b in each outer land portion 5 may be insufficient, and greater tire noise and worse on-ice performance also become cause for concern. On the other hand, if the inclination angle θ7 is greater than 45°, the blocks 5b may suffer uneven wear.

Note that in FIG. 1(a) and FIG. 2, the central sipes 11 extend at an inclination angle of 0° with respect to the tire width direction, yet the case of inclination within a range of ±1° with respect to the tire width direction is also included in the present invention.

Similarly, the outer sipes 15 extend in parallel to the outer inclined grooves 7, yet the case of inclination within a range of ±1° with respect to the outer inclined grooves 7 is also included in the present invention.

### EXAMPLES

The following describes examples of the present invention, yet the present invention is not limited to these examples.

Inventive example tires and a comparative example tire (tire size: 195/65R15) were produced, and under the conditions listed in Table 1, horizontal block rigidity, acceleration performance, and steering stability were assessed, as described below.

Inventive example tire 1 has the specifications listed in Table 2 and the tread pattern illustrated in FIG. 2. The inclination angle θ6 of the intermediate inclined grooves 6 with respect to the tire width direction varies between 20° and 50°, and the inclination angle θ7 of the outer inclined grooves 7 with respect to the tire width direction varies between 5° and 25°. The outer sipes 15 extend along the outer inclined grooves 7.

Reference example tire 2 has the tread pattern illustrated in FIG. 1(a) and is the same as inventive example tire 1 except that the central circumferential grooves 2 are linear and the intermediate inclined narrow groove 8 is not formed.

Inventive example tire 3 has the tread pattern illustrated in FIG. 2 and is the same as inventive example tire 1 except that the inclination angle θ13 of the intermediate sipes 13 with respect to the tire width direction is 0°.

Inventive example tire 4 has the tread pattern illustrated in FIG. 2 and is the same as inventive example tire 1 except that the inclination angle θ13 of the intermediate sipes 13 with respect to the tire width direction is 30°.

Inventive example tire 5 has the tread pattern illustrated in FIG. 2 and is the same as inventive example tire 1 except that the inclination angle θ8 of the intermediate inclined narrow groove 8 with respect to the tire width direction is 90°.

Reference example tire 6 has the tread pattern illustrated in FIG. 2 and is the same as inventive example tire 1 except that the inclination angle θ6 of the intermediate inclined grooves 6 with respect to the tire width direction is 0°.

Inventive example tire 7 has the tread pattern illustrated in FIG. 2 and is the same as inventive example tire 1 except that the inclination angle θ7 of the outer inclined grooves 7 with respect to the tire width direction is 0°.

The comparative example tire is the same as inventive example tire 1 except that the inclination angle θ13 of the intermediate sipes 13 with respect to the tire width direction is -16°. In other words, the intermediate sipes 13 are inclined in the same direction as the intermediate inclined grooves 6.

**Table 1**

| | |
|---|---|
| Internal pressure | 230 kPa |
| Vehicle | FR vehicle (2500 cc displacement) |
| Load | One driver + 60 kg (equivalent to two passengers) |

### Horizontal Block Rigidity

Blocks were cut from each sample tire, a load equivalent to the tire pressure on the block area was applied, and the force produced in the horizontal direction when the block or the tire ground contact area was moved 1 mm was measured. The results are indicated as an index, with the horizontal block rigidity of inventive example tire 1 as 100. Note that a larger index indicates higher horizontal block rigidity.

### On-Snow Acceleration Performance

Each sample tire was mounted on a vehicle, and after starting on a test course with a snowy road surface, the acceleration time from a velocity of 10 km/h to 35 km/h was measured. The results are indicated as an index, with the acceleration time of inventive example tire 1 as 100. Note that a larger index indicates superior acceleration performance.

### Steering Stability

Each sample tire was mounted on a vehicle and run at a constant velocity (80 km/h) on a test course with a snowy road surface and a dry road surface. The steering stability was assessed according to the feeling of a professional driver. The results of assessments are indicated on a scale of 1 to 10. A larger value indicates superior steering stability.

**Table 2**

| | Tread Pattern | θ6 (°) | θ7(°) | θ8(°) | θ13 (°) | Horizontal Block Rigidity | On-Snow Acceleration Performance | On-Snow Steering Stability | Dry Steering stability |
|---|---|---|---|---|---|---|---|---|---|
| Comparative Example | FIG. 2 | 20-50 | 5-25 | 50 | -16 | 90 | 90 | 5.5 | 6.0 |
| Inventive Example 1 | FIG. 2 | 20-50 | 5-25 | 50 | 16 | 100 | 100 | 7.0 | 7.0 |
| Reference Example 2 | FIG. 1(a) | 20-50 | 5-25 | - | 16 | 88 | 83 | 5.0 | 5.5 |
| Inventive Example 3 | FIG. 2 | 20-50 | 5-25 | 50 | 0 | 101 | 97 | 6.5 | 6.5 |
| Inventive Example 4 | FIG. 2 | 20-50 | 5-25 | 50 | 30 | 96 | 92 | 6.0 | 6.5 |
| Inventive Example 5 | FIG. 2 | 20-50 | 5-25 | 90 | 16 | 96 | 91 | 6.0 | 6.5 |
| Reference Example 6 | FIG. 2 | 0 | 5-25 | 50 | 16 | 100 | 93 | 6.0 | 6.5 |
| Inventive Example 7 | FIG. 2 | 20-50 | 0 | 50 | 16 | 100 | 94 | 6.0 | 6.0 |

Table 2 shows that the horizontal block rigidity, acceleration performance, and steering stability of the inventive example tires were equivalent to or better than those of the comparative example tire.

### REFERENCE SIGNS LIST

1: Central land portion
2: Central circumferential groove
3: Intermediate land portion
3b: Block
3b1: Block
3b2: Block
4: Outer circumferential groove
5: Outer land portion
5b: Block
6: Intermediate inclined groove
7: Outer inclined groove
8: Intermediate inclined narrow groove
11: Central sipe
12: Third lug groove
13: Intermediate sipe
131: Intermediate sipe
132: Intermediate sipe
15: Outer sipe
CL: Tire equatorial plane
TE: Tread end

## Claims

1. A pneumatic tire comprising a central land portion (1) including a tire equatorial plane (CL), an intermediate land portion (3) on each side of the central land portion (1) in a tire width direction, a pair of central circumferential grooves (2) extending continuously in a tire circumferential direction each between the central land portion (1) and a respective one of the intermediate land portions (3), an outer land portion (5) on an outside of each intermediate land portion (3) in the tire width direction, the outer land portion including a tread end (TE), and a pair of outer circumferential grooves (4) extending continuously in the tire circumferential direction each between a respective one of the intermediate land portions (3) and a respective one of the outer land portions (5), wherein
the central land portion (1) is defined as a rib by the pair of central circumferential grooves (2) and is provided with a plurality of central sipes (11) extending linearly in the tire width direction,
each intermediate land portion (3) is divided into blocks (3b) by a plurality of intermediate inclined grooves (6) extending obliquely with respect to the tire circumferential direction and providing communication between one of the central circumferential grooves (2) and one of the outer circumferential grooves (4), and each intermediate land portion (3) is provided with a plurality of intermediate sipes (13) inclined at an angle of 0° to 30° with respect to the tire width direction, and
each outer land portion (5) is divided into blocks (5b) by a plurality of outer inclined grooves (7) extending obliquely with respect to the tire circumferential direction and providing communication between one of the outer circumferential grooves (4) and the tread end (TE), and each outer land portion (5) is provided with a plurality of outer sipes (15) extending along the outer inclined grooves (7), opening to the outer circumferential grooves (4); **characterized in that**
all the outer sipes (15) are linear and all the outer sipes (15) extend in parallel to the outer inclined grooves (7), or extend inclined within a range of ±1° with respect to the outer inclined grooves (7),
wherein an inclination angle of the intermediate inclined grooves (6) with respect to the tire width direction is from 5° to 85°,
wherein the blocks (3b) in each intermediate land portion (3) are further divided into block portions (3b1, 3b2) by an intermediate inclined narrow groove (8) that is inclined in the opposite direction as the inclination direction with respect to the tire circumferential direction of the intermediate inclined grooves (6) and
that communicates with the intermediate inclined grooves (6) adjacent to the tire circumferential direction,
**characterised in that**
the intermediate inclined narrow groove (8) has only one bending point, and
wherein, in two blocks (5b) adjacent in the tire circumferential direction, the intermediate inclined narrow groove (8) in one of the two blocks (5b) does not exist on an extending line of the intermediate inclined narrow groove (8) in the other of the two blocks (5b).

2. The pneumatic tire according to claim 1, wherein the central circumferential grooves (2) extend in the tire circumferential direction in a zigzag manner.

3. The pneumatic tire according to claim 1 or 2, wherein an inclination angle of the outer inclined grooves (7) with respect to the tire width direction is from 5° to 45°.

4. The pneumatic tire according to any one of claims 1 through 3, wherein the blocks (3b) in each intermediate land portion (3) are longer in the tire circumferential direction than in the tire width direction, and
the blocks (5b) in each outer land portion (5) are shorter in the tire circumferential direction than in the tire width direction.

5. The pneumatic tire according to any one of claims 1 through 4, wherein all the intermediate sipes (13) are linear.

6. The pneumatic tire according to any one of claims 1 to 5, wherein an inclination angle (θ8) of part of the intermediate inclined narrow groove (8) with respect to the tire width direction is from 15° to 85°.

7. The pneumatic tire according to any one of claims 1 to 6, wherein an inclination angle (θ6) of the intermediate inclined grooves (6) with respect to the tire width direction is from 20° to 50°.

8. The pneumatic tire according to any one of claims 1 to 7, wherein the inclination angle (θ7) of the outer inclined grooves (7) with respect to the tire width direction is from 5° to 25°.

## Patentansprüche

1. Luftreifen, der einen Mittelstegabschnitt (1), der eine Reifenäquatorebene (CL) einschließt, einen Zwischenstegabschnitt (3) auf jeder Seite des Mittelstegabschnitts (1) in einer Reifenbreitenrichtung, ein Paar von mittigen umlaufenden Rillen (2), die sich durchgehend in einer Reifenumfangsrichtung jeweils zwischen dem Mittelstegabschnitt (1) und einem jeweiligen der Zwischenstegabschnitte (3) erstrecken, einen Außenstegabschnitt (5) auf einer in der Reifenbreitenrichtung äußeren Seite jedes Zwischenstegabschnitts (3), wobei der Außenstegabschnitt ein Laufflächenende (TE) einschließt, und ein Paar von äußeren umlaufenden Rillen (4), die sich durchgehend in der Reifenumfangsrichtung jeweils zwischen einem jeweiligen der Zwischenstegabschnitte (3) und einem jeweiligen der Außenstegabschnitte (5) erstrecken, umfasst, wobei
der Mittelstegabschnitt (1) durch das Paar von mittigen umlaufenden Rillen (2) als eine Rippe definiert wird und mit mehreren mittigen Lamellen (11) versehen ist, die sich linear in der Reifenbreitenrichtung erstrecken,
jeder Zwischenstegabschnitt (3) durch mehrere geneigte Zwischenrillen (6), die sich schräg in Bezug auf die Reifenumfangsrichtung erstrecken und eine Verbindung zwischen einer der mittigen umlaufenden Rillen (2) und einer der äußeren umlaufenden Rillen (4) bereitstellen, in Blöcke (3b) geteilt wird und jeder Zwischenstegabschnitt (3) mit mehreren Zwischenlamellen (13) versehen ist, die in einem Winkel von 0° bis 30° in Bezug auf die Reifenbreitenrichtung geneigt sind, und
jeder Außenstegabschnitt (5) durch mehrere äußere geneigte Rillen (7), die sich schräg in Bezug auf die Reifenumfangsrichtung erstrecken und eine Verbindung zwischen einer der äußeren umlaufenden Rillen (4) und dem Laufflächenende (TE) bereitstellen, in Blöcke (5b) geteilt wird und jeder Außenstegabschnitt (5) mit mehreren äußeren Lamellen (15) versehen ist, die sich entlang der äußeren geneigten Rillen (7) erstrecken, wobei sie sich zu den äußeren umlaufenden Rillen (4) öffnen,
**dadurch gekennzeichnet, dass**
alle äußeren Lamellen (15) linear sind und sich alle äußeren Lamellen (15) parallel zu den äußeren geneigten Rillen (7) erstrecken oder sich innerhalb eines Bereichs von ± 1° in Bezug auf die äußeren geneigten Rillen (7) erstrecken,
wobei ein Neigungswinkel der geneigten Zwischenrillen (6) in Bezug auf die Reifenbreitenrichtung von 5° bis 85° beträgt,
wobei die Blöcke (3b) in jedem Zwischenstegabschnitt (3) ferner durch eine geneigte schmale Zwischenrille (8), die in der entgegengesetzten Richtung wie die Neigungsrichtung in Bezug auf die Reifenumfangsrichtung der geneigten Zwischenrillen (6) geneigt ist und die mit den an die Reifenumfangsrichtung angrenzenden geneigten Zwischenrillen (6) kommuniziert, in Blockabschnitte (3b1, 3b2) geteilt werden,
**dadurch gekennzeichnet, dass**
die geneigte schmale Zwischenrille (8) nur einen Biegungspunkt aufweist und
wobei, in zwei angrenzenden Blöcken (5b) in der Reifenumfangsrichtung, die geneigte schmale Zwischenrille (8) in einem der zwei Blöcke (5b) auf einer Verlängerungslinie der geneigten schmalen Zwischenrille (8) in dem anderen der zwei Blöcke (5b) nicht vorhanden ist.

2. Luftreifen nach Anspruch 1, wobei sich die mittigen umlaufenden Rillen (2) auf eine Zickzackweise in der Reifenumfangsrichtung erstrecken.

3. Luftreifen nach Anspruch 1 oder 2, wobei ein Neigungswinkel der äußeren geneigten Rillen (7) in Bezug auf die Reifenbreitenrichtung von 5° bis 45° beträgt.

4. Luftreifen nach einem der Ansprüche 1 bis 3, wobei die Blöcke (3b) in jedem Zwischenstegabschnitt (3) in der Reifenumfangsrichtung länger sind als in der Reifenbreitenrichtung und
die Blöcke (5b) in jedem Außenstegabschnitt (5) in der Reifenumfangsrichtung kürzer sind als in der Reifenbreitenrichtung.

5. Luftreifen nach einem der Ansprüche 1 bis 4, wobei alle Zwischenlamellen (13) linear sind.

6. Luftreifen nach einem der Ansprüche 1 bis 5, wobei ein Neigungswinkel (θ8) eines Teils der geneigten schmalen Zwischenrille (8) in Bezug auf die Reifenbreitenrichtung von 15° bis 85° beträgt.

7. Luftreifen nach einem der Ansprüche 1 bis 6, wobei ein Neigungswinkel (θ6) der geneigten Zwischenrillen (6) in Bezug auf die Reifenbreitenrichtung von 20° bis 50° beträgt.

8. Luftreifen nach einem der Ansprüche 1 bis 7, wobei der Neigungswinkel (θ7) der äußeren geneigten Rillen (7) in Bezug auf die Reifenbreitenrichtung von 5° bis 25° beträgt.

## Revendications

1. Bandage pneumatique, comprenant une partie d'appui centrale (1) incluant un plan équatorial du bandage pneumatique (CL), une partie d'appui intermédiaire (3) sur chaque côté de la partie d'appui centrale (1), dans une direction de la largeur du bandage pneumatique, une paire de rainures circonférentielles centrales (2) s'étendant en continu dans une direction circonférentielle du bandage pneumatique, chacune entre la partie d'appui centrale (1) et une partie respective des parties d'appui intermédiaires (3), une partie d'appui externe (5) sur un côté extérieur de chaque partie d'appui intermédiaire (3), dans la direction de la largeur du bandage pneumatique, la partie d'appui externe incluant une extrémité de la bande de roulement (TE), et une paire de rainures circonférentielles externes (4) s'étendant en continu dans la direction circonférentielle du bandage pneumatique, chacune entre une partie respective des parties d'appui intermédiaires (3) et une partie respective des parties d'appui externes (5), dans lequel :
la partie d'appui centrale (1) est définie sous forme d'une nervure par la paire de rainures circonférentielles centrales (2) et comporte plusieurs lamelles centrales (11) s'étendant de façon linéaire dans la direction de la largeur du bandage pneumatique ;
chaque partie d'appui intermédiaire (3) et divisée en pavés (3b) par plusieurs rainures intermédiaires inclinées (6) s'étendant de manière oblique par rapport à la direction circonférentielle du bandage pneumatique, et établissant une communication entre l'une des rainure circonférentielles centrales (2) et l'une des rainures circonférentielles externes (4), et chaque partie d'appui intermédiaire (3) comporte plusieurs lamelles intermédiaires (13) inclinées à un angle compris entre 0° et 30° par rapport à la direction de la largeur du bandage pneumatique ; et
chaque partie d'appui externe (5) est divisée en pavés (5b) par plusieurs rainures inclinées externes (7) s'étendant de manière oblique par rapport à la direction circonférentielle du bandage pneumatique et établissant une communication entre l'une des rainures circonférentielles externes (4) et l'extrémité de la bande de roulement (TE), et chaque partie d'appui externe (5) comporte plusieurs lamelles externes (15) s'étendant le long des rainures inclinées externes (7) et ouvertes vers les rainures circonférentielles externes (4) ;
**caractérisé en ce que** :
toutes les lamelles externes (15) sont linéaires et toutes les lamelles externes (15) s'étendent de manière parallèle aux rainures inclinées externes (7) ou s'étendent de manière inclinée dans un intervalle de ±1° par rapport aux rainures inclinées externes (7) ;
dans lequel un angle d'inclinaison des rainures intermédiaires inclinées (6) par rapport à la direction de la largeur du bandage pneumatique est compris entre 5° et 85° ;
dans lequel les pavés (3b) dans chaque partie d'appui intermédiaire (3) sont en outre divisés en parties de pavé (3b1, 3b2) par une rainure étroite intermédiaire inclinée (8), inclinée dans la direction opposée à la direction d'inclinaison par rapport à la direction circonférentielle du bandage pneumatique des rainures inclinées intermédiaires (6) et communiquant avec les rainures inclinées intermédiaires (6) adjacentes à la direction circonférentielle du bandage pneumatique ;
**caractérisé en ce que** :
la rainure étroite intermédiaire inclinée (8) comporte uniquement un point de flexion ; et
dans lequel, dans deux pavés (5b) adjacents dans la direction circonférentielle du bandage pneumatique, la rainure étroite intermédiaire inclinée (8) dans l'un des deux pavés (5b) n'existe pas sur une ligne d'extension de la rainure étroite intermédiaire inclinée (8) dans l'autre des deux pavés (5b).

2. Bandage pneumatique selon la revendication 1, dans lequel les rainures circonférentielles centrales (2) s'étendent en zigzag dans la direction circonférentielle du bandage pneumatique

3. Bandage pneumatique selon les revendications 1 ou 2, dans lequel un angle d'inclinaison des rainures inclinées externes (7) par rapport à la direction de la largeur du bandage pneumatique est compris entre 5° et 45°.

4. Bandage pneumatique selon l'une quelconque des revendications 1 à 3, dans lequel les pavés (3b) dans chaque partie d'appui intermédiaire (3) sont plus longs dans la direction circonférentielle du bandage pneumatique que dans la direction de la largeur du bandage pneumatique ; et
les pavés (5b) dans chaque partie d'appui externe (5) sont plus courts dans la direction circonférentielle du bandage pneumatique que dans la direction de la largeur du bandage pneumatique.

5. Bandage pneumatique selon l'une quelconque des revendications 1 à 4, dans lequel toutes les lamelles intermédiaires (13) sont linéaires.

6. Bandage pneumatique selon l'une quelconque des revendications 1 à 5, dans lequel un angle d'inclinaison (θ8) d'une partie de la rainure étroite intermédiaire inclinée (8) par rapport à la direction de la largeur du bandage pneumatique est compris entre 15° et 85°.

7. Bandage pneumatique selon l'une quelconque des revendications 1 à 6, dans lequel un angle d'inclinaison (θ6) des rainures intermédiaires inclinées (6) par rapport à la direction de la largeur du bandage pneumatique est compris entre 20° et 50°.

8. Bandage pneumatique selon l'une quelconque des revendications 1 à 7, dans lequel l'angle d'inclinaison (θ7) des rainures inclinées externes (7) par rapport à la direction de la largeur du bandage pneumatique est compris entre 5° et 25°.
